## Europäisches Patentamt
## European Patent Office
## Office européen des brevets

(11) Veröffentlichungsnummer : **0 121 221**
**B1**

(12) # EUROPÄISCHE PATENTSCHRIFT

(45) Veröffentlichungstag der Patentschrift :
02.03.88

(51) Int. Cl.⁴ : **H 04 Q  1/14**

(21) Anmeldenummer : **84103385.5**

(22) Anmeldetag : **27.03.84**

(54) **Rangierleiste mit einer Mehrzahl von den abisolierfreien Anschluss elektrischer Leiter gestattenden Doppelanschlussklemmen.**

(30) Priorität : **30.03.83 DE 3311694**
**30.03.83 DE 3311695**

(43) Veröffentlichungstag der Anmeldung :
**10.10.84 Patentblatt 84/41**

(45) Bekanntmachung des Hinweises auf die Patenterteilung : **02.03.88 Patentblatt 88/09**

(84) Benannte Vertragsstaaten :
**AT BE CH FR GB IT LI NL SE**

(56) Entgegenhaltungen :
**DE-A- 2 719 269**
**DE-A- 2 834 708**
**DE-B- 2 320 692**
**US-A- 2 667 529**

(73) Patentinhaber : **Siemens Aktiengesellschaft Berlin und München**
**Wittelsbacherplatz 2**
**D-8000 München 2 (DE)**

(72) Erfinder : **Scholtholt, Hans**
**Tannenstrasse 4**
**D-8044 Lohhof (DE)**
Erfinder : **Dolansky, Franz**
**Buschingstrasse 41**
**D-8000 München 80 (DE)**
Erfinder : **Steiner, Ewald**
**Fichtenweg 11**
**D-8137 Berg 3 (DE)**

Jouve, 18, rue St-Denis, 75001 Paris, France

EP 0 121 221 B1

## Beschreibung

Die Erfindung bezieht sich auf eine Rangierleiste mit einer Mehrzahl von den abisolierfreien Anschluß elektrischer Leiter gestattenden Doppelanschlußklemmen.

Eine derartige Rangierleiste ist z. B. aus dem Aufsatz « lötfreie Anschlußtechnik für Fernmeldeverteilereinrichtungen » in « telcom report », 1981, Heft 5, Seiten 409 ff, bekannt geworden. Danach werden die ankommenden Leitungen auf einer der beiden Längsseiten zugeführt und die abgehenden Leitungen auf der gegenüberliegende Längsseite weggeführt.

Ferner ist es durch die DE-A-27 19 269 bekannt, die Verteilerleiste mit einem annähernd quadratischen Querschnitt zu versehen. Die Leiste weist entlang der oberen Längsseiten zwei Doppelreihen von Doppelanschlußklemmen auf, die innerhalb einer jeden Doppelreihe alternierend zueinander versetzt angeordnet sind. Die Doppelanschlußklemmen sind ferner so angeordnet, daß jeweils einer auf der einen Seite außen liegenden Anschlußklemme eine auf der gegenüberliegenden Längsseite nach innen versetzte Doppelanschlußklemme gegenüberliegt. Dabei sind alle ankommenden Leitungsadern an die Anschlußklemmen der einen Seite und alle abgehenden Rangierleitungen an die Anschlußklemmen der anderen Seite angeschlossen. Jeweils einander gegenüberliegende Doppelanschlußklemmen sind innerhalb des Isolierstoffkörpers durch einen Steg miteinander verbunden. Der seitliche Abstand zwischen zwei in einer Fluchtlinie liegende Doppelanschlußklemmen entspricht im wesentlichen der Breite einer Doppelanschlußklemme. Dabei weisen die in Längsrichtung der Anschlußleiste hintereinander liegenden Verbindungsstege einen sehr geringen seitlichen Abstand auf.

Der Erfindung liegt die Aufgabe zugrunde, eine Rangierleiste zu schaffen, die geordnete Drahtführungsverhältnisse aufweist, die sehr kompakt gehalten ist und die für jeden Leitungszug eine hinreichende Anzahl von Anschlußstellen bietet.

Diese Aufgabe wird durch die Erfindung gemäß Anspruch 1 gelöst. Durch die mittleren Kabelkanäle können die ankommenden Leitungen genau den zugehörigen Anschlußelementen zugeordnet werden. Dadurch können die ankommenden Leitungen aus einer anderen Richtung als die abgehenden Rangierleitungen an die Doppelanschlußklemmen herangeführt werden. Diese beiden Leitungstypen können daher, ohne sich gegenseitig zu stören, ohne Schwierigkeit an die Doppelanschlußklemmen angeschlossen werden. Durch die Zuordnung eines Kabelkanals zu jeweils zwei hintereinanderliegenden Doppelanschlußklemmen wird zwischen den Kabelkanälen ein Zwischenraum geschaffen, in dem die Verbindungsstege zwischen den gegenüberliegenden Doppelanschlußklemmen angeordnet werden können.

Eine weitere zweckmäßige Ausgestaltung der erfindungsgemäßen Verteilerleiste ist dadurch gekennzeichnet, daß zumindest an einer Seitenwand der Verteilerleiste an der oberen und der unteren Längsseite nebeneinanderliegende Drahtführungsschlitze vorgesehen sind, daß jeweils ein oberer Drahtführungsschlitz und ein senkrecht darunter liegender Drahtführungsschlitz einer Leitungsader zugeordnet sind, und daß an der Unterseite der Verteilerleiste in Längsrichtung nebeneinander eine vorgegebene Anzahl von Drahtführungsösen vorgesehen sind, wobei jede Drahtführungsösen mehreren Leitungsadern zugeordnet ist.

Bei dieser Ausgestaltung der erfindungsgemäßen Verteilerleiste ist es z. B. vorteilhaft, daß die ankommenden Außenleitungen leicht vorverdrahtet werden können, in dem jeweils die Sternvierer eines Bündels entsprechend ihres Farbcodes durch die an der Unterseite der Verteilerleiste angeordneten Drahtführungsösen geführt werden, und anschließend die einzelnen Leitungsadern mittels zwei einander zugeordneter Drahtführungsschlitze einzeln an die Verteilerleiste angeklemmt werden. Dadurch ist eine übersichtliche und den Leitungsverlauf eindeutig kennzeichnende Vorverdrahtung möglich.

Eine andere zweckmäßige Ausgestaltung der erfindungsgemäßen Verteilerleiste ist dadurch gekennzeichnet, daß an jeder Ecke der Verteilerleiste ein Drahtführungskanal mit Öffnungen auf beiden Seiten der der jeweiligen Ecke benachbarten Seitenwänden vorgesehen ist, wobei die äußere Begrenzung des Drahtführungskanals aus zwei mit der Verteilerleiste verbundenen Stiften besteht, die einen schräg nach unten verlaufenden Einführungsschlitz für die Leitungsadern begrenzen. Mit Hilfe dieser Drahtführungskanäle wird z. B. das seitliche Wegführen der anzuschließenden Rangierleitungen erheblich vereinfacht.

Die vorliegende Erfindung soll im folgenden anhand eines in der Zeichnungen dargestellten Ausführungsbeispiel näher erläutert werden. Es zeigen

Fig. 1 eine perspektivische Ansicht einer Rangierleiste gemäß der Erfindung, und

Fig. 2 eine Draufsicht einer Rangierleiste gemäß der Erfindung.

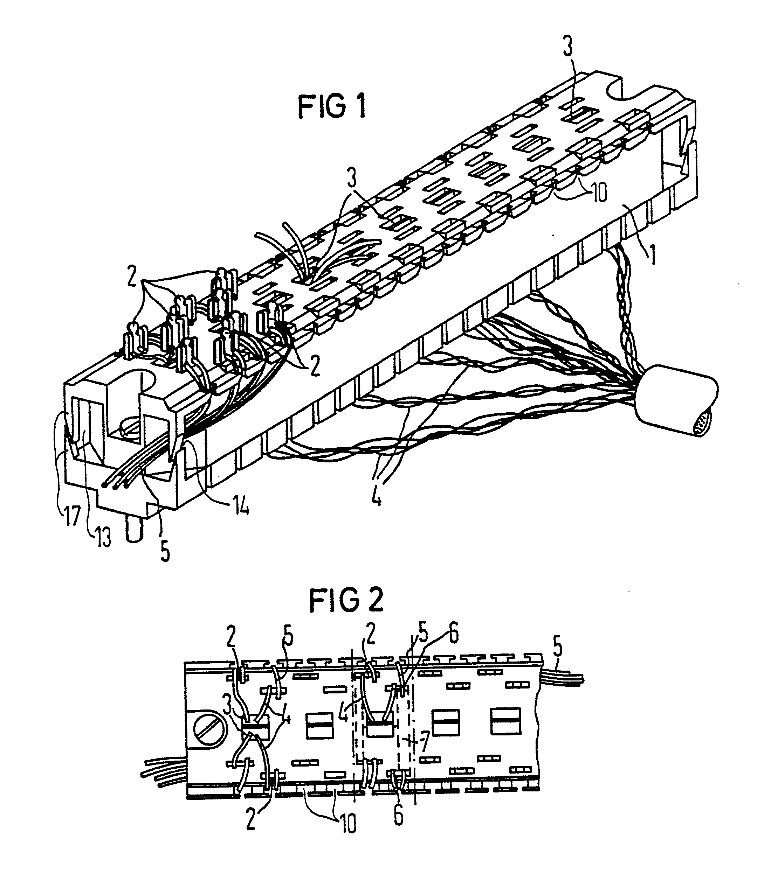

Fig. 1 zeigt eine Rangierleiste gemäß der Erfindung, die aus einem Isolierstoffkörper 1 besteht und an den oberen Längsseiten dieses Isolierstoffkörpers 1 eine Mehrzahl von den abisolierfreien Anschluß elektrischer Leiter gestattender Doppelanschlußklemmen 2 aufweist. Die ankommenden Leitungsadern 4 werden von unten durch die Kabelkanäle 3 zur Oberseite des Isolierstoffkörpers 1 geführt (siehe auch Fig. 2). Von der Austrittsöffnung der Kabelkanäle 3 an der Oberseite des Isolierstoffkörpers 1 werden die ankommenden Leitungsadern zu einer Klemme der Doppelanschlußklemmen 2 geführt. Von der anderen Klemme der Doppelanschlußklemme 2 werden die Rangierleitungen 5 abgeführt. Bei der erfindungsgemäßen Rangierleitung reichen daher zwei an einer Längsseite benachbarte Doppelanschlußklemmen 2 aus, um eine ankommende Doppelader mit einer abgehenden Doppelader zu verbinden. Für bestimmte Anwendungsfälle in Verteileranlagen wird verlangt, daß pro ankommender Leitungsader drei abgehende Leitungsadern angeschlossen werden können. Dies läßt sich bei den bekannten Rangierleisten nur mit einem zusätzlichen Rangieraufwand und damit verbunden mit einer Einbuße an Anschlußkapazität durchführen. Bei der erfindungsgemäßen Rangierleiste läßt sich dieses Problem durch zwei mittels eines Steges 7 verbundene Anschlußklemmen 6 auf einfache Weise lösen. Dadurch daß zwei gegenüberliegende Doppelanschlußklemmen 6 miteinander verbunden sind, entfällt der für derartige Rangierungen sonst notwendige Rangieraufwand, wobei hinzukommt, daß bei der erfindungsgemäßen Rangierleiste aufgrund der Leitungsadernführung der Platzbedarf für eine derartige Rangierung sehr gering ist.

An den oberen Längskanten des Isolierstoffkörpers 1 sind Drahtführungsschlitze 10 angeordnet, durch die die abgehenden Rangierleitungen 5 hindurchgeführt werden. An den Ecken des Isolierstoffkörpers sind ferner je ein Drahtführungskanal 13 vorgesehen, der nach außen durch zwei mit dem Isolierstoffkörper verbundenen Stifte 17 begrenzt ist, die einen schräg nach unten verlaufenden Einführungsschlitz 14 für die Rangierleitungen 2 aufweisen.

## Patentansprüche

1. Rangierleiste mit einer Mehrzahl von den abisolierfreien Anschluß elektrischer Leiter gestattenden Doppelanschlußklemmen (2), wobei die Verteilerleiste einen annähernd quadratischen Querschnitt aufweist und die Doppelanschlußklemmen (2) an den oberen Längsseiten eines Isolierstoffkörpers (1) in Aufnahmen derart versetzt gehalten sind, daß immer einer auf der einen Längsseite am äußeren Rand angeordneten Doppelanschlußklemme (2) für eine ankommende Leitungsader (4) eine an der anderen Längsseite nach innen versetzte Doppelanschlußklemme (2) für eine abgehende Rangierleitung (5) gegenüberliegt, wobei der seitliche Abstand zwischen zwei in einer Fluchtlinie liegenden Doppelanschlußklemmen (2) im wesentlichen der Breite einer Doppelanschlußklemme (2) entspricht, und wobei jeweils einander gegenüberliegende Doppelschlußklemmen (2) innerhalb des Isolierstoffkörpers (1) durch einen Steg (7) miteinander verbunden sind, dadurch gekennzeichnet, daß zwischen an den oberen Längsseiten angeordneten gegenüberliegenden Doppelanschlußklemmen (2) senkrecht durch den Isolierstoffkörper (1) von der Oberseite zur Unterseite verlaufende Kabelkanäle (3) für die ankommenden Leitungsadern (4) vorgesehen sind, wobei jeweils ein Kabelkanal (3) zwei an einer Längsseite angeordneten benachbarten Doppelanschlußklemmen (2) zugeordnet ist.

2. Verteilerleiste nach Anspruch 1, dadurch gekennzeichnet, daß zumindest an einer Seitenwand des Isolierstoffkörpers (1) an der oberen Längskante nebeneinanderliegende Drahtführungsschlitze (10) vorgesehen sind.

3. Verteilerleiste nach Anspruch 2, dadurch gekennzeichnet, daß an jeder Ecke des Isolierstoffkörpers (1) ein Drahtführungskanal (13) mit Öffnungen zu beiden Seiten der jeweiligen Ecke vorgesehen ist, wobei die äußere Begrenzung des Drahtführungskanals (13) aus zwei mit dem Isolierstoffkörper (1) verbundenen Stiften (17) besteht, die einen schräg nach unten verlaufenden Einführungsschlitz (14) für die Rangierleitungen (5) begrenzen.

## Claims

1. A jumper strip comprising a plurality of double connection terminals (2) which allow electrical conductors to be connected without being stripped, where the distributor strip has an approximately square cross-section and the double connection terminals (2) are supported in receivers along the upper longitudinal sides of an insulating component (1), offset in such manner that each double connection terminal (2) for an incoming line wire (4) which is arranged at the outer edge of one longitudinal side lies opposite a double connection terminal (2) for an outgoing jumper line (5) which is inwardly offset from the other longitudinal side, where the lateral distance between two aligned double connection terminals (2) fundamentally corresponds to the breadth of one double connection terminal (2), and where mutually opposed double connection terminals (2) within the insulating component (1) are in each case connected to one another by a rib (7), characterised in that cable channels (3) for the incoming line wires (4) are arranged between mutually opposing double connection terminals (2) arranged along the upper longitudinal sides, where said cable channels (3) extend vertically through the insulating component (1) from its top to its bottom, and where each cable channel (3) is assigned to two adjacent double connection terminals (2) arranged along a longitudinal side.

2. A distributor strip as claimed in Claim 1, characterised in that juxtaposed wire guidance slots (10) are provided at least along a side wall of the insulating component (1) at the upper longitudinal edge.

3. A distributor strip as claimed in Claim 2, characterised in that at each corner of the insulating component (1) a wire guidance channel (13) is provided with openings on both sides of the respective corner, where the outer boundary of the wire guidance channel (13) consists of two pins (17) which are connected to the insulating component (1) and which delimit a downwardly sloping insulating insertion slot (14) for the jumper lines (5).

## Revendications

1. Barrette de distribution comportant une multiplicité de bornes de raccordement doubles (2) permettant le raccordement sans dénudage de conducteurs électriques, et possédant une section transversale approximativement carrée, et dans laquelle les bornes de raccordement doubles (2) sont maintenues sur les côtés longitudinaux supérieurs d'un corps en matière plastique (1) dans des logements, en y étant décalées, de telle sorte qu'en permanence en vis-à-vis d'une borne de raccordement double (2) disposée sur un côté longitudinal au niveau du bord extérieur et prévue pour un conducteur d'arrivée (4) d'une ligne se trouve toujours disposée une borne de raccordement double (2) décalée vers l'intérieur sur l'autre côté longitudinal et prévue pour une ligne de distribution de départ (5) et dans laquelle la distance latérale entre deux bornes de raccordement doubles (2) situées sur une droite d'alignement correspond essentiellement à la largeur d'une borne de raccordement double (2), et dans laquelle les bornes de raccordement doubles (2), qui sont respectivement en vis-à-vis les unes des autres, sont reliées entre elles par l'intermédiaire d'une barrette (7) à l'intérieur du corps en matériau isolant (1), caractérisée par le fait que des conduits à câbles (3), qui traversent perpendiculairement le corps en matériau isolant (1) de la face supérieure vers la face inférieure et sont prévus pour des conducteurs d'arrivée de lignes (4) sont ménagés entre les bornes de raccordement doubles (2) situées en vis-à-vis et disposées sur les côtés longitudinaux supérieurs, auquel cas un conduit à câbles (3) est associé respectivement à deux bornes de raccordement doubles (2) voisines, situées sur un côté longitudinal.

2. Barrette de distribution suivant la revendication 1, caractérisée par le fait que des fentes (10) de passage de fils, qui sont disposées côte-à-côte sur le bord longitudinal supérieur, sont prévues au moins dans une paroi latérale du corps en matériau isolant (1).

3. Barrette de distribution suivant la revendication 2, caractérisée par le fait qu'à chaque angle du corps en matériau isolant (1) se trouve prévu un conduit (13) de passage de fils, qui comporte des ouvertures situées des deux côtés de l'angle respectif, la limite extérieure du conduit (13) de passage des fils étant constituée par deux tiges (17) reliées au corps en matériau isolant (1) et qui limitent une fente d'insertion (14), qui s'étend vers le bas et est prévue pour les lignes de distribution (5).

## FIG 1

## FIG 2